# EUROPÄISCHE PATENTSCHRIFT

(11) **EP 3 759 374 B1**
(45) Veröffentlichungstag und Bekanntmachung des Hinweises auf die Patenterteilung: **01.06.2022**
(21) Anmeldenummer: 19705701.1
(22) Anmeldetag: 05.02.2019
(51) Int. Cl.: F16F 15/14

(54) **FLIEHKRAFTPENDELEINRICHTUNG MIT GEWELLTER FEDERSCHEIBE; KUPPLUNGSSCHEIBE SOWIE ANTRIEBSSTRANG**
CENTRIFUGAL PENDULUM DEVICE WITH A WAVE SPRING WASHER; CLUTCH DISC; AND POWERTRAIN
ÉQUIPEMENT DE PENDULE À FORCE CENTRIFUGE À POULIE ÉLASTIQUE ONDULÉE ; POULIE D'EMBRAYAGE ET CHAÎNE CINÉMATIQUE

(30) Priorität: 01.03.2018 DE 102018104651
(43) Veröffentlichungstag der Anmeldung: 06.01.2021
(73) Patentinhaber: Schaeffler Technologies AG & Co. KG, 91074 Herzogenaurach (DE)
(72) Erfinder: MATTES, Julian, 78600 Kolbingen (DE); FRANZ, Evgenij, 76437 Rastatt (DE); RUSCH, Alain, 67760 Gambsheim (FR); HÄSSLER, Martin, 76676 Graben-Neudorf (DE); KESSLER, Michael, 77815 Bühl (DE); GMEINER, Timm, 76185 Karlsruhe (DE); PINNAU, Philippe, 67770 Stattmatten (FR); KAUFMANN, Christoph, 77815 Bühl (DE); KUEN, Gerhard, 77731 Willstätt (DE); HOCHSTUHL, Sascha, 77830 Bühlertal (DE)
(86) Internationale Anmeldenummer: PCT/DE2019/100122
(87) Internationale Veröffentlichungsnummer: WO 2019/166052

(56) Entgegenhaltungen:
- DE-A1-102014 211 711
- DE-A1-102016 223 192
- DE-B3-102014 218 548

## Beschreibung

Die Erfindung betrifft eine Fliehkraftpendeleinrichtung (auch als Fliehkraftpendel verkürzt bezeichnet) für einen Antriebsstrang eines Kraftfahrzeuges, wie eines Pkws, Lkws, Busses oder sonstigen Nutzfahrzeuges, mit einem um eine Drehachse drehbaren Träger, einer derart an dem Träger entlang einer Kulissenbahn pendelbar aufgenommenen Pendelmasse, dass durch die Pendelmasse im Betrieb (der Fliehkraftpendeleinrichtung) ein einer Drehungleichförmigkeit (des Antriebsstranges) entgegen gerichtetes Rückstellmoment erzeugt ist, einem an der Pendelmasse relativverschieblich anliegenden Kontaktelement sowie einer, das Kontaktelement in einer axialen Richtung der Drehachse an die Pendelmasse andrückenden, gewellten Federscheibe (auch als Wellscheibe bezeichnet), wobei die Federscheibe an einem Befestigungsbereich drehfest mit dem Träger verbunden ist. Zudem betrifft die Erfindung eine Kupplungsscheibe sowie einen Antriebsstrang, jeweils aufweisend eine Fliehkraftpendeleinrichtung.

Gattungsgemäße Fliehkraftpendeleinrichtungen sind aus dem Stand der Technik bereits hinlänglich bekannt. Ein prinzipieller Aufbau einer Fliehkraftpendeleinrichtung ist beispielsweise mit der DE 10 2013 203 694 A1 offenbart. Des Weiteren offenbart die DE 10 2010 049 553 A1 eine Fliehkraftpendeleinrichtung mit einem Mittel, das mindestens eine Pendelmasse drehzahlabhängig in ihrer Bewegung bremst.

Mit der DE 10 2014 211 711 A1 ist es offenbart, pendelnd in einem Pendelflansch im Fliehkraftfeld eines drehenden Pendelflansches eingehängte Pendel axial gegenüber dem Pendelflansch vorzuspannen, um harte Anschläge der Pendel am Pendelflansch zu verhindern. Diese Vorspannung erfolgt mittels Kontaktelementen, die axial zwischen einem Seitenteil des Pendelflansches und dem Pendel eingesetzt sind.

Des Weiteren ist der Anmelderin interner Stand der Technik bekannt, der noch nicht veröffentlicht ist, jedoch bereits als deutsche Patentanmeldung am 9. März 2017 unter dem Aktenzeichen 10 2017 104 968.1 eingereicht worden ist. Hierin sind Biegefedern offenbart, die als Wellscheiben ausgebildet sind.

Als Nachteil der aus dem Stand der Technik bekannten Ausführungen hat es sich jedoch herausgestellt, dass die eingesetzten Federscheiben zum Andrücken der entsprechenden Kontaktelemente an den Pendelmassen in ihrer Herstellung relativ aufwändig sind. Dies liegt insbesondere an der derzeit relativ aufwändig ausgebildeten Aufnahme dieser Federscheiben seitens des Trägers. Die Abstützgeometrie an den Federscheiben ist so umgesetzt, dass zu deren Herstellung relativ kompliziert aufgebaute und daher relativ störanfällige Herstellwerkzeuge benötigt sind.

Es ist daher Aufgabe der vorliegenden Erfindung, die aus dem Stand der Technik bekannten Nachteile zu beheben und den Herstellaufwand der Fliehkraftpendeleinrichtung zu reduzieren.

Dies wird erfindungsgemäß dadurch gelöst, dass die Federscheibe mit ihrem Befestigungsbereich mit einem in der axialen Richtung hin zu der Pendelmasse vorspringenden / vorstehenden trägerfesten Bestandteil verbunden ist.

Dadurch ist es möglich, die bisher in ihrer Herstellung relativ aufwändig auszuformende gewellte Federscheibe auf deutlich einfachere Weise drehfest an dem Träger anzubringen. Die Federscheibe braucht nun nicht mehr mit zusätzlichen axial vorspringende Laschen, die bisher die Herstellung der gewellten Federscheibe deutlich erschweren, versehen zu werden. Die Federscheibe wird auf besonders einfache Weise lediglich an dem trägerfesten Bestandteil eingehängt.

Weitere vorteilhafte Ausführungsformen sind mit den Unteransprüchen beansprucht und nachfolgend näher erläutert.

Demnach ist es auch von Vorteil, wenn der trägerfeste Bestandteil durch einen, zwei in axialer Richtung beabstandet zueinander angeordnete Trägerbereiche des Trägers miteinander verbindender Abstandsbolzen ausgebildet ist. Dadurch wird ein ohnehin am Träger vorgesehener Bestandteil zur Aufnahme der gewellten Federscheibe verwendet. Der Herstellaufwand wird dadurch weiter reduziert.

Bildet / formt die Federscheibe unmittelbar eine (vorzugsweise in radialer Richtung nach außen abstehende) an dem trägerfesten Bestandteil befestigte Verbindungslasche als Befestigungsbereich aus, wird die Bauteilanzahl weiter reduziert.

Auch ist es von Vorteil, wenn die Federscheibe alternativ ein den Befestigungsbereich mit ausbildendes, an dem trägerfesten Bestandteil befestigtes (separates) Verbindungselement aufweist. Dadurch ist der mit dem trägerfesten Bestandteil verbundene Bereich der gewellten Federscheibe einfach herstellbar.

Das Verbindungselement ist in diesem Zusammenhang bevorzugt an einem Ringabschnitt der Federscheibe befestigt.

Von Vorteil ist es zudem, wenn der Befestigungsbereich der Federscheibe mit einem Aufnahmeloch, wie einem im Querschnitt betrachteten kreisrunden Durchgangsloch oder einem radial nach außen geöffneten (Durchgangs-) Loch, vorzugsweise in Form einer Kerbe, versehen ist und der trägerfeste Bestandteil in der axialen Richtung dieses Aufnahmeloch durchdringt. Dadurch ist der Befestigungsbereich auf einfache Weise in Umfangsrichtung formschlüssig mit dem trägerfesten Bestandteil verbunden.

Ist der Befestigungsbereich der Federscheibe derart mit dem trägerfesten Bestandteil verbunden, dass ein gewellter / gebogener Federbereich der Federscheibe, der vorzugsweise in Umfangsrichtung an den Befestigungsbereich anschließt, in axialer Richtung ungehindert verformbar ist, bleiben der Federweg der Federscheibe sowie die durch die Federscheibe aufgebrachte Axialkraft im Betrieb weitestgehend unbeeinflusst.

Hinsichtlich der Anbringung des Befestigungsbereiches an dem trägerfesten Bestandteil ist es weiterhin vorteilhaft, wenn der Befestigungsbereich stoffschlüssig, vorzugsweise über eine Klebe-, Schweiß- oder Lötverbindung, mit dem trägerfesten Bestandteil verbunden ist.

Alternativ hierzu ist es zweckmäßig, wenn der Befestigungsbereich formschlüssig und/oder kraftschlüssig mit dem trägerfesten Bestandteil verbunden ist. Dadurch wird die Montagezeit weiter verkürzt.

Die Federscheibe ist vorzugsweise stets im Fliehkraftpendel / Träger eingehängt, zu seiner Drehachse zentriert aufgenommen sowie verdrehgesichert.

Des Weiteren betrifft die Erfindung eine Kupplungsscheibe für eine Reibkupplung eines Kraftfahrzeuges, mit der erfindungsgemäßen Fliehkraftpendeleinrichtung nach zumindest einer der zuvor beschriebenen Ausführungen sowie einem mit dem Träger drehfest verbundenen Reibelement.

Zudem betrifft die Erfindung einen Antriebsstrang für ein Kraftfahrzeug, mit der erfindungsgemäßen Fliehkraftpendeleinrichtung nach zumindest einer der zuvor beschriebenen Ausführungen, wobei der Träger mit einer Triebwelle, wie einer Ausgangswelle einer Verbrennungskraftmaschine oder einer Getriebeeingangswelle, drehfest verbunden ist. Die Fliehkraftpendeleinrichtung ist dabei wiederum Bestandteil einer Kupplungsscheibe einer Reibkupplung oder außerhalb einer Kupplungsscheibe / einer Reibkupplung angeordnet.

In anderen Worten ausgedrückt, ist erfindungsgemäß eine Kupplungsscheibe mit Fliehkraftpendel, bei dem eine Wellscheibe (Federscheibe) mit den Abstandsbolzen des Fliehkraftpendels verbunden ist, umgesetzt. Es ist bevorzugt ein Zusammenbau aus einer Kupplungsscheibe und einem Fliehkraftpendel vorgeschlagen, wobei das Fliehkraftpendel an der Kupplungsscheibe befestigt ist bzw. in axialer Richtung innerhalb eines Bauraums einer Kupplung angeordnet ist und/oder drehfest mit der Kupplungsscheibe über die Getriebeeingangswellen verbunden ist. Die Wellscheibe ist an den Abstandsbolzen, die die beiden Pendelflansche (Trägerbereiche des Trägers) verbinden, wobei zwischen den Pendelflanschen die Pendelmassen in axialer Richtung angeordnet sind, eingehängt bzw. mit den Abstandsbolzen verbunden, um ein Verrutschen und Verdrehen der Wellscheibe zu verhindern.

Die Erfindung wird nun nachfolgend anhand von Figuren näher erläutert, in welchem Zusammenhang auch verschiedene Ausführungsbeispiele dargestellt sind.

Es zeigen:
- Fig. 1: eine Längsschnittdarstellung einer erfindungsgemäßen Fliehkraftpendeleinrichtung nach einem bevorzugten Ausführungsbeispiel, wobei die Anordnung zweier, axial zwischen mehreren Pendelmassen und einem Träger der Fliehkraftpendeleinrichtung eingesetzter Federscheiben erkennbar ist,
- Fig. 2: eine Längsschnittdarstellung der Fliehkraftpendeleinrichtung nach Fig. 1 in einem Detailbereich, der die Befestigung zwischen den Federscheiben und einem Abstandsbolzen des Trägers erkennen lässt,
- Fig. 3: eine weitere Längsschnittdarstellung der Fliehkraftpendeleinrichtung nach Fig. 1, wobei eine Abstützung der Federscheiben seitens eines mit einer Pendelmasse verbundenen Kontaktelementes ersichtlich ist,
- Fig. 4: eine Vorderseite einer eine Fliehkraftpendeleinrichtung nach den Fign. 1 bis 3 aufweisenden Kupplungsscheibe, wobei die Fliehkraftpendeleinrichtung zu einer axialen Seite hin zu erkennen ist,
- Fig. 5: eine Seitenansicht der Kupplungsscheibe nach Fig. 4,
- Fig. 6: eine Draufsicht auf eine der in der Fliehkraftpendeleinrichtung der Fign. 1 bis 3 eingesetzten Federscheiben, wobei die mit Befestigungsbereichen der Federscheibe verbundenen Abstandsbolzen schematisch dargestellt sind,
- Fig. 7: eine perspektivische Darstellung der Federscheibe nach Fig. 6, wobei mehrere zwischen den Befestigungsbereichen in Umfangsrichtung gewellt ausgebildete Federbereiche der Federscheibe erkennbar sind,
- Fig. 8: eine Draufsicht einer Federscheibe, wie sie in einer erfindungsgemäßen Fliehkraftpendeleinrichtung eines zweiten Ausführungsbeispiels eingesetzt ist, wobei die Federscheibe im Vergleich zu der Federscheibe des ersten Ausführungsbeispiels nicht radial nach außen geöffnete Aufnahmelöcher, sondern kreisrunde Aufnahmelöcher zur Aufnahme der Abstandsbolzen aufweist,
- Fig. 9: eine Draufsicht einer Federscheibe, wie sie in einer erfindungsgemäßen Fliehkraftpendeleinrichtung eines dritten Ausführungsbeispiels eingesetzt ist, wobei die Aufnahmebolzen jeweils mit dem Aufnahmeloch vernietet sind,
- Fig. 10: eine Draufsicht einer Federscheibe, wie sie in einer erfindungsgemäßen Fliehkraftpendeleinrichtung eines vierten Ausführungsbeispiels eingesetzt ist, in dem die Abstandsbolzen im Bereich des Aufnahmelochs mit dem Befestigungsbereich verschweißt sind,
- Fig. 11: eine Draufsicht einer Federscheibe, wie sie in einer erfindungsgemäßen Fliehkraftpendeleinrichtung eines fünften Ausführungsbeispiels eingesetzt ist, wobei die mit dem jeweiligen Abstandsbolzen verschweißten Aufnahmelöcher im Vergleich zu Fig. 10 in radialer Richtung nach außen geöffnet sind,
- Fig. 12: eine Draufsicht einer Federscheibe, wie sie in einer erfindungsgemäßen Fliehkraftpendeleinrichtung eines sechsten Ausführungsbeispiels eingesetzt ist, wobei der Befestigungsbereich der Federscheibe ein mit dem Abstandsbolzen verbundenes Verbindungselement, das an einem Ringabschnitt der Federscheibe befestigt ist, aufweist,
- Fig. 13: eine Draufsicht einer Federscheibe, wie sie in einer erfindungsgemäßen Fliehkraftpendeleinrichtung eines siebten Ausführungsbeispiels eingesetzt ist, wobei im Vergleich zu dem Ausführungsbeispiel der Fig. 12 das in dem Verbindungselement eingebrachte Aufnahmeloch in radialer Richtung nach außen geöffnet ist,
- Fig. 14: eine Draufsicht einer Federscheibe, wie sie in einer erfindungsgemäßen Fliehkraftpendeleinrichtung eines achten Ausführungsbeispiels eingesetzt ist, wobei das Verbindungselement formschlüssig über einen Zapfenabschnitt an dem Ringabschnitt angebracht ist,
- Fig. 15: eine Draufsicht einer Federscheibe, wie sie in einer erfindungsgemäßen Fliehkraftpendeleinrichtung eines neunten Ausführungsbeispiels eingesetzt ist, wobei im Vergleich zu dem Ausführungsbeispiel der Fig. 14 das in dem Verbindungselement eingebrachte Aufnahmeloch in radialer Richtung nach außen geöffnet ist,
- Fig. 16: eine Draufsicht einer Federscheibe, wie sie in einer erfindungsgemäßen Fliehkraftpendeleinrichtung eines zehnten Ausführungsbeispiels eingesetzt ist, in dem das Verbindungselement unmittelbar bei seinem Urformvorgang um den Ringabschnitt herum gespritzt worden ist, und
- Fig. 17: eine Draufsicht einer Federscheibe, wie sie in einer erfindungsgemäßen Fliehkraftpendeleinrichtung eines elften Ausführungsbeispiels eingesetzt ist, wobei im Vergleich zu Fig. 13 in dem jeweiligen Verbindungselement ein kreisförmiges Aufnahmeloch ausgebildet ist.

Die Figuren sind lediglich schematischer Natur und dienen ausschließlich dem Verständnis der Erfindung. Die gleichen Elemente sind mit denselben Bezugszeichen versehen. Auch können die unterschiedlichen Merkmale der verschiedenen Ausführungsbeispiele frei miteinander kombiniert werden.

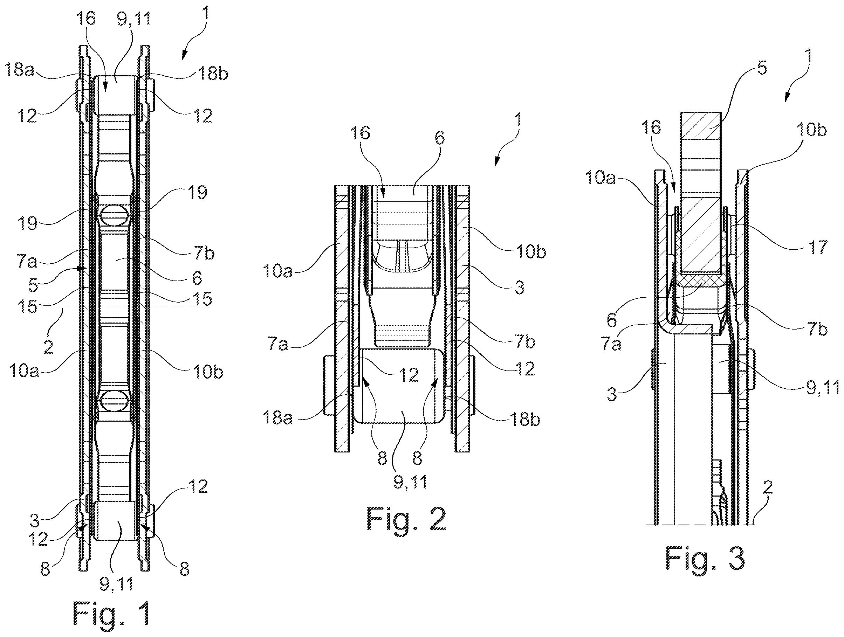

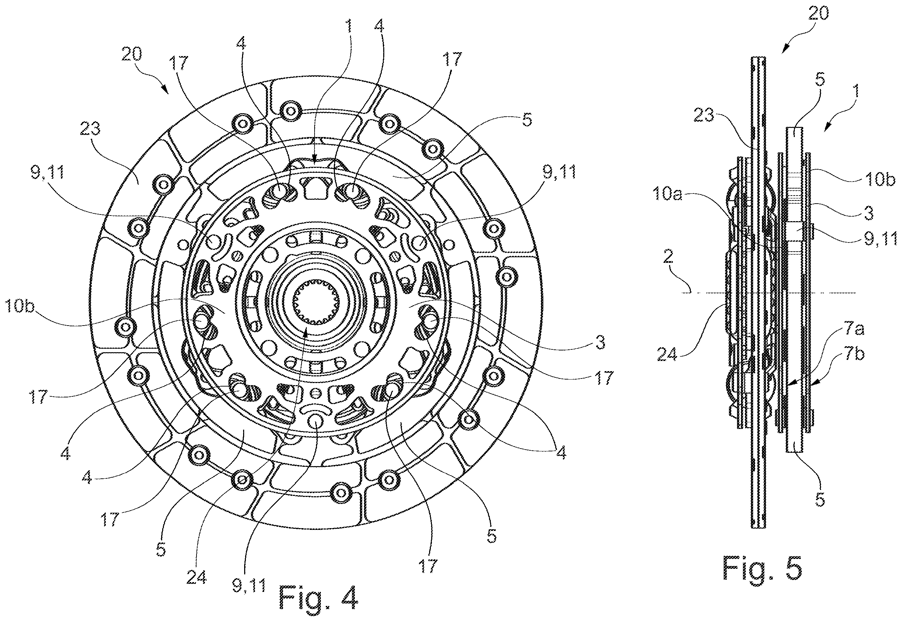

In den Fign. 1 bis 3 ist ein prinzipieller Aufbau der erfindungsgemäßen Fliehkraftpendeleinrichtung 1 nach einem ersten Ausführungsbeispiel zu erkennen. Die Fliehkraftpendeleinrichtung 1 ist in ihrem Betrieb bevorzugt Bestandteil einer mit den Fign. 4 und 5 veranschaulichten Kupplungsscheibe 20 einer Kupplung in Form einer Reibkupplung. Die Fliehkraftpendeleinrichtung 1 ist drehfest mit einer Nabe 24 der Kupplungsscheibe 20 verbunden. Die Nabe 24 ist weiter mit einem Reibelement 23 der Kupplungsscheibe 20 drehfest verbunden. Auch kann die Fliehkraftpendeleinrichtung 1 gemäß weiteren Ausführungen mit einem Flansch / Flanschbereich der Kupplungsscheibe 20 drehfest verbunden sein. Die der Übersichtlichkeit halber nicht weiter dargestellte Kupplung ist auf typische Weise in einem Antriebsstrang eines Kraftfahrzeuges, nämlich zwischen einer Ausgangswelle einer Verbrennungskraftmaschine und einer Eingangswelle eines Getriebes, eingesetzt. Die Fliehkraftpendeleinrichtung 1 ist folglich im Betrieb Teil des Antriebsstranges des Kraftfahrzeuges. Alternativ, gemäß weiteren Ausführungen, ist die Fliehkraftpendeleinrichtung 1 auch direkt an einer Triebwelle des Antriebsstranges, wie der Ausgangswelle der Verbrennungskraftmaschine oder der Getriebeeingangswelle, drehfest angebracht. Die Fliehkraftpendeleinrichtung 1 dient in ihrem Betrieb auf typische Weise dazu, eine in dem Antriebsstrang, insbesondere eine seitens der Verbrennungskraftmaschine erzeugte Drehungleichförmigkeit auszugleichen. Hierzu weist die Fliehkraftpendeleinrichtung 1 den aus der DE 10 2014 211 711 A1 bekannten grundlegenden Aufbau auf.

Die Fliehkraftpendeleinrichtung 1 weist nach Fig. 1 einen Träger 3 auf, der auch als Pendelflansch / Trägerflansch bezeichnet ist. Der Träger 3 ist aus zwei in axialer Richtung beabstandet zueinander gehaltenen Trägerbereichen 10a, 10b aufgebaut. Die beiden Trägerbereiche 10a und 10b sind jeweils als Pendelflansch / Flanschbereich bezeichnet. Jeder Trägerbereich 10a und 10b ist im Wesentlichen scheibenförmig ausgebildet. Der Träger 3 ist um eine Drehachse 2 rotierbar angeordnet. Die Drehachse 2 ist im Betrieb vorzugsweise koaxial mit der Ausgangswelle der Verbrennungskraftmaschine / Getriebeeingangswelle angeordnet. Die beiden Trägerbereiche 10a und 10b sind über Abstandsbolzen 11 drehfest miteinander verbunden. Die Abstandsbolzen 11 legen zudem einen axialen Abstand (entlang der Drehachse 2) der beiden Trägerbereiche 10a und 10b relativ zueinander fest. Hierzu ist jeder Trägerbereich 10a, 10b an einer von zwei axial abgewandten Stufen 18a, 18b des Abstandsbolzens 11 mittelbar abgestützt (Fig. 2). In Umfangsrichtung des Trägers 3 (in Bezug auf die Drehachse 2) sind mehrere Abstandsbolzen 11 verteilt angeordnet. Die Abstandsbolzen 11 sind in dem jeweiligen Trägerbereich 10a, 10b vernietet, d.h. kraft- und formschlüssig mit dem Trägerbereich 10a, 10b verbunden.

In dem durch die Trägerbereiche 10a, 10b gebildeten (axialen) Innenraum 16 des Trägers 3 sind mehrere in Umfangsrichtung verteilt angeordnete Pendelmassen 5 relativ zu dem Träger 3 bewegbar / pendelbar angeordnet. Wie in der Ansicht nach Fig. 4 zu einer Vorderseite der Fliehkraftpendeleinrichtung 1 zu erkennen, weist jede Pendelmasse 5 zwei Führungsbolzen 17 auf, die jeweils in Kulissenbahnen 4 des Trägers 3 hinein ragen. Je Führungsbolzen 17 einer Pendelmasse 5 weist sowohl der erste Trägerbereich 10a als auch der zweite Trägerbereich 10b eine Kulissenbahn 4 auf (in Fig. 4 für den zweiten Trägerbereich 10b repräsentativ dargestellt). Die einem Führungsbolzen 17 zugeordneten Kulissenbahnen 4 der beiden Trägerbereiche 10a, 10b bilden jeweils eine Führungskulisse für diesen Führungsbolzen 17 aus. Die Kulissenbahnen 4 erstrecken sich in Umfangsrichtung betrachtet gebogen (d.h. sowohl in Umfangsrichtung als auch in radialer Richtung). Insbesondere erstrecken sich die Kulissenbahnen 4 jeweils U-förmig in Umfangsrichtung. Somit führt die Pendelmasse 5 im Betrieb bei einer auftretenden Drehungleichförmigkeit auf gewohnte Weise eine Pendelbewegung durch, welche Pendelbewegung ein der Drehungleichförmigkeit entgegen gerichtetes Rückstellmoment erzeugt.

Fig. 3 zeigt, dass an der jeweiligen Pendelmasse 5 ein Kontaktelement 6 anliegt, wobei das Kontaktelement 6 in axialer Richtung mittels zweier gewellter Federscheiben 7a, 7b an die Pendelmasse 5 angedrückt ist. Das Kontaktelement 6 ist radial von innen (in Bezug auf die Drehachse 2) an der jeweiligen Pendelmasse 5 angeordnet. Das Kontaktelement 6 ist im Querschnitt betrachtet im Wesentlichen U-förmig ausgebildet. Das somit eine sich in Umfangsrichtung erstreckende Rinnenstruktur ausbildende Kontaktelement 6 ist in radialer Richtung nach außen geöffnet und von einer radialen Innenseite an der jeweiligen Pendelmasse 5 angebracht. Das Kontaktelement 6 liegt somit in radialer Richtung von innen an der Pendelmasse 5 an und ist gleichzeitig zu den jeweils axial abgewandten Seiten an der Pendelmasse 5 abgestützt. Das Kontaktelement 6 ist aus einem Kunststoff hergestellt. Das Kontaktelement 6 ist so an der Pendelmasse 5 aufgenommen, dass es sich in Umfangsrichtung relativ zu der Pendelmasse 5 verschieben lässt.

Eine erste Federscheibe 7a ist zu einer ersten axialen Seite der Pendelmasse 5 hin axial zwischen dem ersten Trägerbereich 10a und der Pendelmasse 5 / der ersten axialen Seite des Kontaktelementes 6 angeordnet. Eine zweite Federscheibe 7b ist zu einer zweiten axialen Seite der Pendelmasse 5 hin axial zwischen dem zweiten Trägerbereich 10b und der Pendelmasse 5 / der zweiten axialen Seite des Kontaktelementes 6 angeordnet. Die jeweilige Federscheibe 7a, 7b dient zum Andrücken des Kontaktelementes 6 an die Pendelmasse 5 bzw. zum Vorpannen des Kontaktelementes 6 relativ zu dem Träger 3 gegen die Pendelmasse 5. Da die beiden Federscheiben 7a, 7b in ihrer Anordnung und Abstützung seitens des Kontaktelementes 6 (in Bezug auf eine senkrecht zu der Drehachse 2 ausgerichtete Spiegelebene) spiegelsymmetrisch ausgebildet sind, ist nachfolgend lediglich auf die erste Federscheibe 7a der Kürze wegen eingegangen. Somit ist eine Reibeinrichtung durch das Kontaktelement 6 und die Federscheiben 7a, 7b zur Verfügung gestellt, die zwischen jeder Pendelmasse 5 und dem Träger 3 wirkt, um die Relativbewegung (Pendelbewegung) der Pendelmassen 5 zu dem Träger 3 zu hemmen / dämpfen.

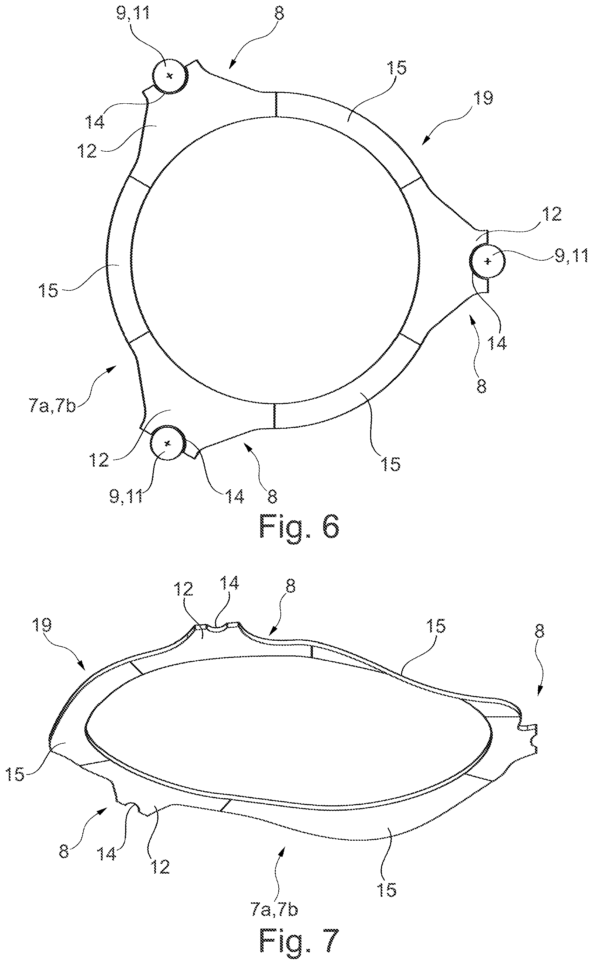

Die erste Federscheibe 7a stützt sich mit mehreren in Umfangsrichtung verteilten gewellten Federbereichen 15 in axialer Richtung an dem Kontaktelement 6 ab. Wie in Fig. 7 in der perspektivischen Darstellung der gewellten ersten Federscheibe 7a zu erkennen, weist die erste Federscheibe 7a einen (ringförmig umlaufenden) Ringabschnitt 19 auf, der diese Federbereiche 15 unmittelbar mit ausbildet. Die erste Federscheibe 7a weist in Umfangsrichtung gesehen drei Federbereiche 15 auf. Jeder Federbereich 15 ist in axialer Richtung gewellt, d.h. bildet eine in axialer Richtung vorstehende Welle aus. Der jeweilige Federbereich 15 ist gar derart gewellt, dass seine Wellungshöhe am Außendurchmesser höher ist als die Wellungshöhe am Innendurchmesser. Der jeweilige Federbereich 15 erstreckt sich in axialer Richtung gesehen somit an seiner radialen Außenseite weiter axial als an seiner radialen Innenseite.

Jeder Federbereich 15 ist in Umfangsrichtung einer Pendelmasse 5 an dem Kontaktelement 6 abgestützt. In Umfangsrichtung zwischen je zwei benachbarten Federbereichen 15 ist ein Befestigungsbereich 8 der ersten Federscheibe 7a vorgesehen, welcher Befestigungsbereich 8 mit einem trägerfesten Bestandteil 9 in Form eines Abstandsbolzens 11 fest verbunden ist. Die Befestigungsbereiche 8 der ersten Federscheibe 7a stützen sich axial an dem ersten Trägerbereich 10a ab; die Befestigungsbereiche 8 der zweiten Federscheibe 7b stützen sich axial an dem zweiten Trägerbereich 10b ab. In anderen Worten ausgedrückt, ist jeder Befestigungsbereich 8 der ersten Federscheibe 7a mit radial über einen geschlossenen Ring (Ringabschnitt 19) hinausragenden Elementen / Bereichen (Verbindungslaschen 12) mit den Abstandsbolzen 11 verbunden. Auch jeder Befestigungsbereich 8 der zweiten Federscheibe 7b ist mit radial über den geschlossenen Ring (Ringabschnitt 19) hinausragenden Elementen / Bereichen (Verbindungslaschen 12) mit den Abstandsbolzen 11 verbunden. Die Federbereiche 15 bilden zusammen mit den Befestigungsbereichen 8 den Ringabschnitt 19 der jeweiligen Federscheibe 7a, 7b aus.

Wie weiterhin in Fig. 6 zu erkennen, sind die drei Befestigungsbereiche 8 jeweils gegenüber den Federbereichen 15 im Wesentlichen flach / eben / ungewellt ausgeformt. Die erste Federscheibe 7a ist in axialer Richtung so zwischen dem Träger 3 und dem Kontaktelement 6 eingespannt, dass sie mit einer bestimmten Axialkraft auf das Kontaktelement 6 und dieses wiederum mit einer bestimmten Axialkraft gegen die Pendelmasse 5 drückt. Dadurch wird im Betrieb bei der Relativbewegung der Pendelmasse 5 zu dem Kontaktelement 6 eine gezielte Reibung erzeugt.

In dem ersten Ausführungsbeispiel nach den Fign. 1 bis 7 ist der Befestigungsbereich 8 jeweils durch eine in radialer Richtung von dem Federbereich 15 aus abstehende Verbindungslasche 12 des Ringabschnittes 19 unmittelbar mit ausgeformt. Hierbei ist ersichtlich, dass die jeweilige Verbindungslasche 12 einen Verdickungsbereich der ersten Federscheibe 7a bildet. Die Verbindungslasche 12 geht in Umfangsrichtung gesehen kontinuierlich / allmählich in den Federbereich 15 über. Dadurch wird eine Kerbwirkung im Betrieb reduziert.

In der Verbindungslasche 12 ist ein Aufnahmeloch 14 eingebracht. Dieses Aufnahmeloch 14 durchdringt den Befestigungsbereich 8 in axialer Richtung gesehen. Das Aufnahmeloch 14 ist in dem ersten Ausführungsbeispiel in Form einer in radialer Richtung nach außen geöffneten Kerbe / Ausnehmung ausgebildet. Das Aufnahmeloch 14 weist somit einen halbkreisförmigen Querschnitt auf. Der jeweilige Befestigungsbereich 8 ist mit seinem Aufnahmeloch 14 auf einfache Weise radial von innen an dem Abstandsbolzen 11, unter Ausbilden einer in Umfangsrichtung wirkenden formschlüssigen Verbindung, eingehängt.

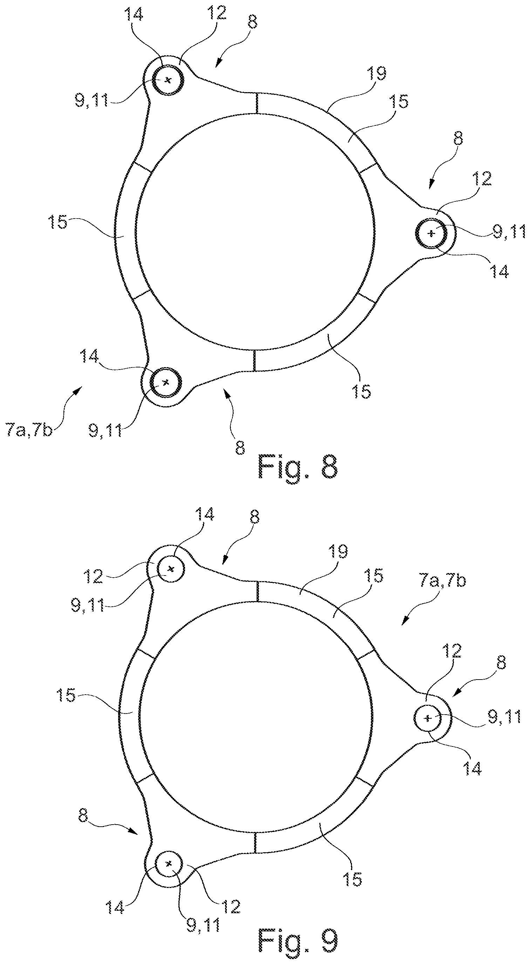

In Verbindung mit den Fign. 8 bis 17 sind nachfolgend verschiedene Ausführungsbeispiele der erfindungsgemäßen Fliehkraftpendeleinrichtung 1 dargestellt, die sich lediglich in der veranschaulichten Ausgestaltung der Federscheiben 7a, 7b und/oder Befestigung der Federscheiben 7a, 7b an den Abstandsbolzen 11 voneinander unterscheiden. Der übrige Aufbau sowie die Funktion dieser weiteren Ausführungsbeispiele entsprechen dem ersten Ausführungsbeispiel.

Gemäß dem zweiten Ausführungsbeispiel nach Fig. 8 ist der jeweilige Befestigungsbereich 8 der Federscheibe 7a, 7b mit einem Aufnahmeloch 14 mit kreisrundem Querschnitt ausgebildet. Das jeweilige Aufnahmeloch 14 ist somit durch einen vollständig umlaufenden Lochleibungsbereich gebildet. Das Aufnahmeloch 14 bildet wiederum ein Durchgangsloch aus. Auch in dieser Ausführung sind die Verbindungslaschen 12 / Befestigungsbereiche 8 auf dem Abstandsbolzen 11 axial aufgeschoben und somit formschlüssig in Umfangsrichtung fixiert.

Mit dem Ausführungsbeispiel nach Fig. 9 ist zu erkennen, dass statt der reinen formschlüssigen Verbindung auch prinzipiell eine kraft- und formschlüssige Verbindung zur Befestigung der Federscheibe 7a, 7b an dem Träger 3 realisierbar ist. In diesem Ausführungsbeispiel ist der Abstandsbolzen 11 an dem Befestigungsbereich 8 angenietet. Somit ist die Federscheibe 7a, 7b fest an den Abstandsbolzen 11 eingespannt / befestigt.

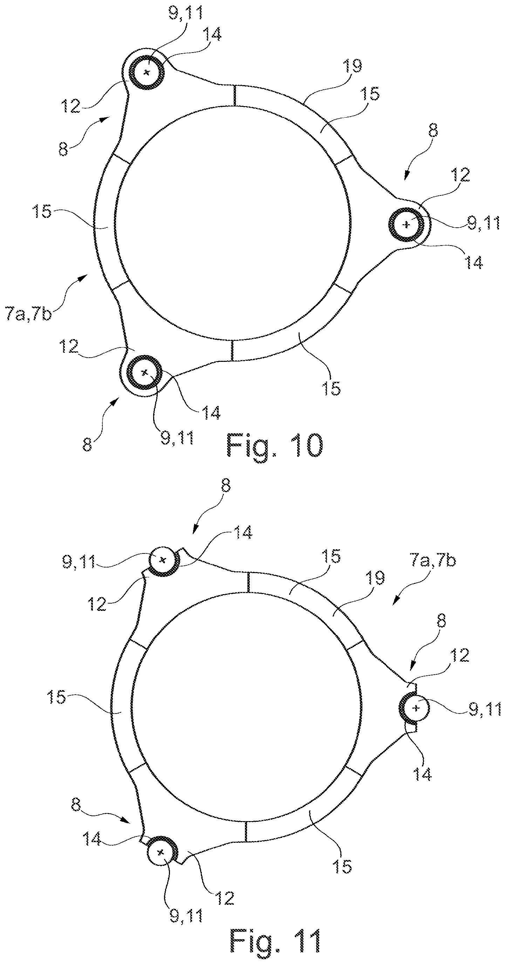

In Verbindung mit den Fign. 10 und 11 sind zwei weitere Ausführungsbeispiele veranschaulicht. Hieraus ist ersichtlich, dass statt der formschlüssigen und/oder kraftschlüssigen Verbindung auch eine stoffschlüssige Verbindung zwischen dem Abstandsbolzen 11 und dem Befestigungsbereich 8 vorsehbar ist.

In Fig. 10 ist die Verbindungslasche 12 mit seinem durchgängig umlaufenden, das Aufnahmeloch 14 umgebenden Leibungsbereich an den Abstandsbolzen 11 angeschweißt. Die den Befestigungsbereich 8 mit dem Abstandsbolzen 11 verbindende Schweißnaht läuft in Umfangsrichtung vollständig um.

In Fig. 11 ist die Federscheibe 7a, 7b gleich der Federscheibe 7a, 7b des ersten Ausführungsbeispiels ausgebildet, nun jedoch, wie in Fig. 10 stoffschlüssig mit dem Abstandsbolzen 11 verbunden. Das radial nach außen geöffnete Aufnahmeloch 14 ist somit mittels einer U-förmigen Schweißnaht mit dem Abstandsbolzen 11 verbunden.

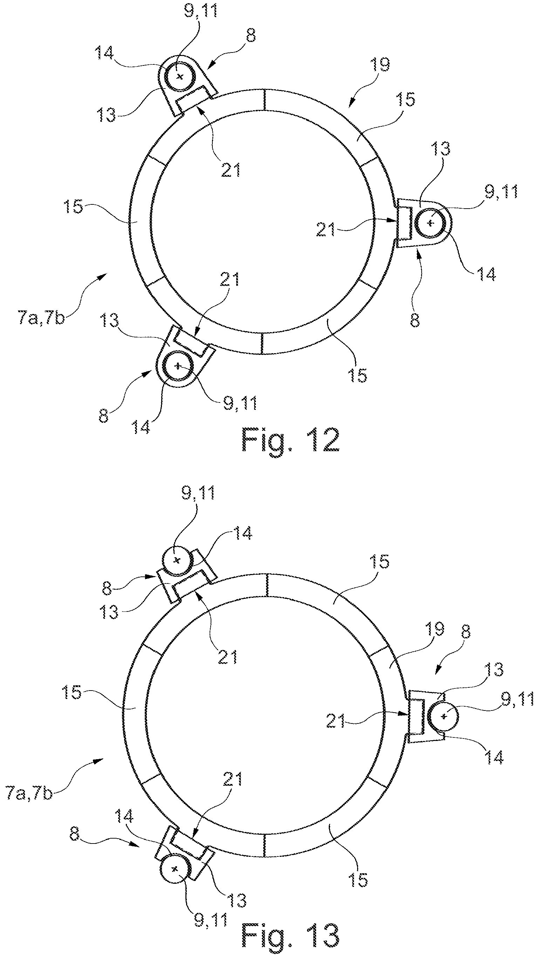

In Verbindung mit den Ausführungsbeispielen der Fign. 12 bis 17 ist weiterhin zu erkennen, dass der Befestigungsbereich 8 der Federscheibe 7a, 7b auch mehrteilig umgesetzt sein kann. Der jeweilige Befestigungsbereich 8 weist neben einem Umfangsbereich des Ringabschnittes 19 ein mit dem Ringabschnitt 19 verbundenes, separat ausgeformtes Verbindungselement 13 auf. Je Befestigungsbereich 8 ist das Verbindungselement 13 drehfest an dem Ringabschnitt 19 (in dem Umfangsbereich in Umfangsrichtung zwischen zwei benachbarten Federbereichen 15) angebracht. Das Verbindungselement 13 weist das Aufnahmeloch 14, indem der Abstandsbolzen 11 eingeschoben ist, auf.

In Fig. 12 ist das Verbindungselement 13 im Wesentlichen kappenförmig ausgeführt. Die Federscheibe 7a, 7b bildet an ihrem Ringabschnitt 19, in Umfangsrichtung zwischen zwei benachbarten Federbereichen 15, eine radial nach außen abstehende Nase 21 / Zunge aus. An dieser Nase 21 ist radial von außen das Verbindungselement 13 aufgeschoben und an der Nase 21 aufgehängt / befestigt. Das Verbindungselement 13 weist ein Aufnahmeloch 14 mit vollständigem Lochleibungsbereich auf.

In Fig. 13 ist das Aufnahmeloch 14, im Vergleich zu Fig. 12, als eine in radialer Richtung nach außen geöffnete Ausnehmung / Kerbe ausgeführt, wie auch bereits in dem ersten Ausführungsbeispiel realisiert. Wie bereits in Fig. 12 ist auch in Fig. 13 der jeweilige Abstandsbolzen 11 formschlüssig an dem Verbindungselement 13 fixiert. Prinzipiell sei darauf hingewiesen, dass wiederum auch andere stoffschlüssige (vorzugsweise Klebeverbindung) oder kraft- und/oder formschlüssige Verbindungen in weiteren Ausführungen umgesetzt sind.

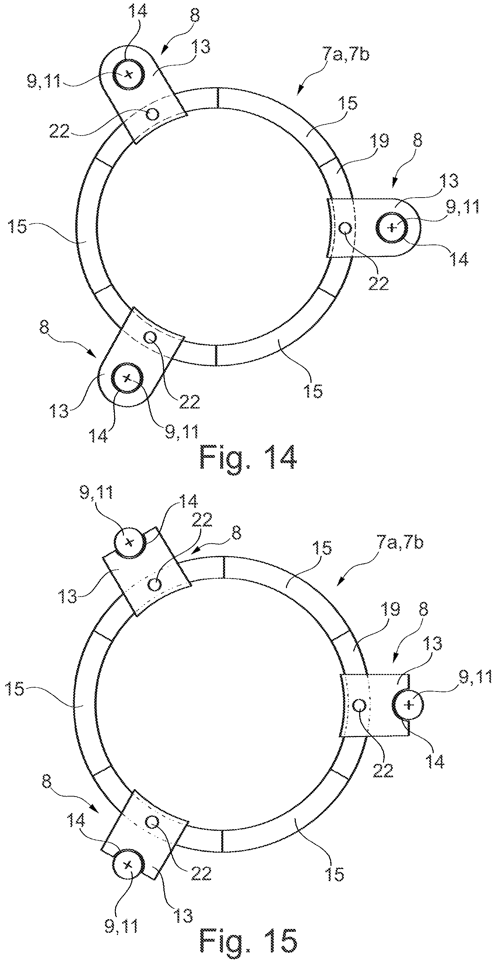

In den Fign. 14 und 15 ist das Verbindungselement 13 ebenfalls formschlüssig seitens des Ringabschnittes 19 befestigt. In dem Ringabschnitt 19 ist ein axiales Durchgangsloch eingebracht, in das ein komplementär dazu ausgebildeter Stift 22 (auch als Zapfen bezeichnet) des Verbindungselementes 13 eingerastet / eingeschoben ist. Die beiden Ausführungsbeispiele nach den Fign. 14 und 15 unterscheiden sich untereinander durch die Ausbildung ihres Aufnahmeloches 14 auf gleiche Weise wie die Ausführungsbeispiele der Fign. 12 und 13.

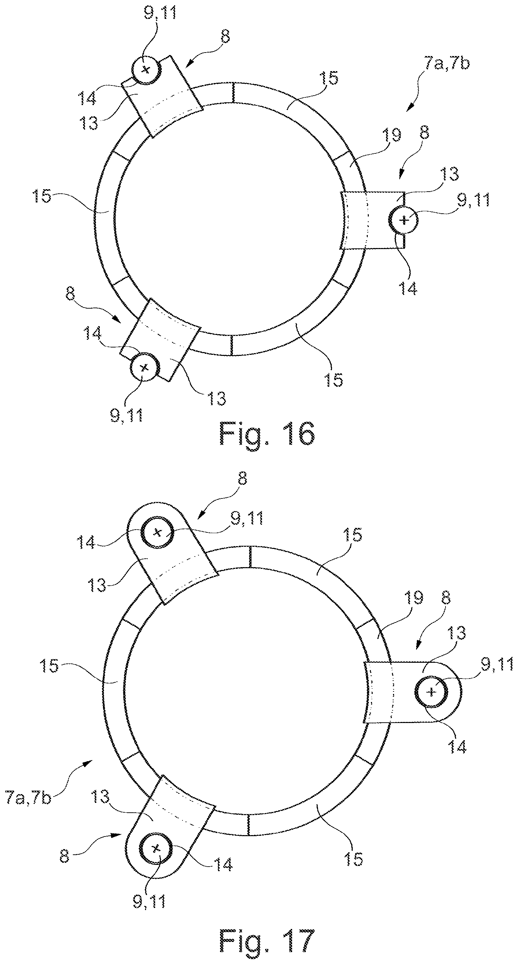

In Fig. 16 ist das Verbindungselement 13 kraft- und formschlüssig an dem Befestigungsbereich 8 angebracht. Das Verbindungselement 13 ist in seinem Urformvorgang unmittelbar an den Ringabschnitt 19 angespritzt. Das Verbindungselement 13 ist aus einem Kunststoff (alternativ gemäß weiteren Ausführungen auch Metall) hergestellt und daher bevorzugt in einem Spritzgießverfahren direkt an den Ringabschnitt 19 so angespritzt, dass es im ausgehärteten Zustand einen kraft- und formschlüssigen Verbund mit dem Ringabschnitt 19 eingeht.

Die beiden Ausführungsbeispiele nach den Fign. 16 und 17 unterscheiden sich untereinander durch die Ausbildung ihres Aufnahmeloches 14 auf gleiche Weise wie die Ausführungsbeispiele der Fign. 12 und 13.

In anderen Worten ausgedrückt, stellt die erfindungsgemäße Ausbildung eine besonders geschickte Einhängung, Zentrierung und Verdrehsicherung der Wellscheibe (Federscheibe 7a, 7b) im Fliehkraftpendel 1 bereit. Die Wellscheibe 7a, 7b für eine Fliehkraftpendeleinrichtung 1 übt vom Träger 3 aus eine Kraft auf ein Reibelement oder Kontaktelement 6, vorzugsweise aus Kunststoff, aus, welches die Pendelmassen 5 stellenweise oder vollständig umhüllt, so dass bei einer Bewegung der Pendelmassen 5 relativ zum Träger 3 eine konstante Reibkraft gegen die Bewegungsrichtung entsteht. Die Wellscheibe 7a, 7b ist in ihrer Form ringförmig und geschlossen. Die Wellscheibe 7a, 7b weist drei gleichmäßig am Umfang verteilte Wellungen (Federbereiche 15) auf. Sie weist ebenso eine Wellungshöhe auf, wobei die Wellungshöhe am Außendurchmesser höher ist als die Wellungshöhe am Innendurchmesser. Des Weiteren weist die Wellscheibe 7a, 7b radial über den geschlossenen Ring (Ringabschnitt 19) hinausragende Elemente (Verbindungslaschen 12 oder Verbindungselemente 13) auf, die in die Abstandsbolzen 11 oder andere axial hinausragende Elemente im Fliehkraftpendel 1 eingehängt werden können und die zum Positionieren, zum Zentrieren und zur Kraftübertragung verwendet werden können. Die radial über den geschlossenen Ring 19 hinausragenden Elemente 12; 13 weisen Aufnahmelöcher 14 in Form einer Durchgangsbohrung oder einer zum Außendurchmesser hin offenen Durchgangsbohrung auf und sind an den Abstandsbolzen 11 eingehängt. Die über den geschlossenen Ring hinausragenden Elemente 12, 13 beeinflussen weder den Federweg noch die dabei aufgebrachte Axialkraft und der Übergang der Elemente 12, 13 zum geschlossenen Ring 19 ist Spannungsspitzen reduzierend gestaltet. Die radial über den geschlossenen Ring 19 hinausragenden Elemente 12, 13 sind weiter bevorzugt stoffschlüssig durch einen Klebe-, Schweiß- oder Lötprozess mit einem Element (trägerfester Bestandteil 9) im Fliehkraftpendel 1 verbunden. Besonders bevorzugt sind die radial über den geschlossenen Ring 19 hinausragenden Elemente 12, 13 mit einem Element 9 im Fliehkraftpendel 1 mittels einer Nietverbindung verbunden. Weiter bevorzugt sind radial über den geschlossenen Ring 19 hinausragende Elemente form-, kraft- oder stoffschlüssig mit einem Zusatzelement (Verbindungselement 13) aus Kunststoff oder einem metallischen Werkstoff verbunden und dieses wiederum mit einem Element 9 im Fliehkraftpendel 1 durch Form-, Kraft- oder Stoffschluss verbunden.

Gemäß den Ausführungen der Figuren 1 bis 11 ist die Wellscheibe 7a, 7b direkt an dem jeweiligen Abstandsbolzen 11 angebracht. Dies erfolgt vorzugsweise über Formschluss: Die Wellscheibe 7a, 7b ist zwischen Flansch (Träger 3) und Reibelement 6 angeordnet, so dass der höchste Punkt der Wellscheibe 7a, 7b an der Reibhülse (Kontaktelement 6) anliegt und der tiefste Punkt sich am Flansch 3 abstützt. Zum Positionieren und zur Kraftübertragung weist die Wellscheibe 7a, 7b sogenannte Montagekerben bzw. Montagebohrungen (Aufnahmelöcher 14) auf, die in den benachbarten Abstandsbolzen 11 eingehängt werden, wie in den Fign. 6 und 8 erkennbar. Alternativ zu dem Formschluss ist eine Vernietung weiter bevorzugt: Die Wellscheibe 7a, 7b ist zwischen Flansch 3 und Reibelement 6 angeordnet, so dass der höchste Punkt der Wellscheibe 7a, 7b an der Reibhülse 6 anliegt und der tiefste Punkt sich am Flansch 3 abstützt. Zum Positionieren und zur Kraftübertragung weist die Wellscheibe 7a, 7b eine Montagebohrung 14 auf, die in den benachbarten Abstandsbolzen 11 eingehängt wird, wie in Fig. 9 erkennbar. Über diese Bohrung 14 wird die Wellscheibe 7a, 7b mit dem Abstandsbolzen 11 vernietet, wobei der Abstandsbolzen 11 die Funktion des Niets übernimmt. Alternativ zu dem Formschluss und der Vernietung ist auch eine stoffschlüssige Verbindung weiter bevorzugt: Die Wellscheibe 7a, 7b ist zwischen Flansch 3 und Reibelement 6 angeordnet, so dass der höchste Punkt der Wellscheibe 7a, 7b an der Reibhülse 6 anliegt und der tiefste Punkt sich am Flansch 3 abstützt. Zum Positionieren und zur Kraftübertragung weist die Wellscheibe 7a, 7b eine Montagekerbe oder Montagebohrung (Aufnahmeloch 14) auf, die in den benachbarten Abstandsbolzen 11 eingehängt werden, wie in den Fign. 10 und 11 gezeigt. Über diese Kerbe bzw. Bohrung 14 wird die Wellscheibe 7a, 7b mit dem Abstandsbolzen 11 verklebt, verschweißt oder verlötet, wobei eine stoffschlüssige Verbindung entsteht.

Gemäß den Ausführungen der Figuren 12 bis 17 ist ein Zusatzelement 13 zwischen der Wellscheibe 7a, 7b und dem jeweiligen Abstandsbolzen 11 vorgesehen. Die Befestigung erfolgt vorzugsweise über Formschluss: Die Wellscheibe 7a, 7b ist zwischen Flansch 3 und Reibelement 6 angeordnet, so dass der höchste Punkt der Wellscheibe 7a, 7b an der Reibhülse 6 anliegt und der tiefste Punkt sich am Flansch 3 abstützt. Zum Positionieren und zur Kraftübertragung weist die Wellscheibe 7a, 7b am Außendurchmesser zungenförmige Elemente (Nasen 21) auf, die in ein Zusatzelement 13 eingreifen, welches wiederrum mittels Montagekerbe oder Montagebohrung 14 in den benachbarten Abstandsbolzen 11 eingehängt wird, wie in den Fign. 12 und 13 realisiert. Alternativ weist die Wellscheibe 7a, 7b zum Positionieren und zur Kraftübertragung in ihrem geschlossenen Ring 19 Durchgangsbohrungen auf, in die zapfenförmige Elemente 22 eines Zusatzelements 13 eingreifen. Dieses wird wiederrum mittels Montagekerbe oder Montagebohrung 14 in den benachbarten Abstandsbolzen eingehängt wird, wie in den Fign. 14 und 15 realisiert. Alternativ wird die Wellscheibe 7a, 7b mit einem Zusatzelement 13 aus Kunststoff umspritzt und so eine formschlüssige Verbindung geschaffen. Das Zusatzelement 13 wird wiederrum mittels Montagekerbe oder Montagebohrung 14 in den benachbarten Abstandsbolzen 11 eingehängt, wie in den Fign. 16 und 17 realisiert.

Die in Verbindung mit den Figuren 12 bis 17 genannten Ausführungen lassen sich ebenfalls mittels Stoffschluss in Form einer Klebung oder mit einer zusätzlich angebrachten Klebung realisieren.

### Bezugszeichenliste

- 1: Fliehkraftpendeleinrichtung
- 2: Drehachse
- 3: Träger
- 4: Kulissenbahn
- 5: Pendelmasse
- 6: Kontaktelement
- 7a: erste Federscheibe
- 7b: zweite Federscheibe
- 8: Befestigungsbereich
- 9: trägerfester Bestandteil
- 10a: erster Trägerbereich
- 10b: zweiter Trägerbereich
- 11: Abstandsbolzen
- 12: Verbindungslasche
- 13: Verbindungselement
- 14: Aufnahmeloch
- 15: Federbereich
- 16: Innenraum
- 17: Führungsbolzen
- 18a: erste Stufe
- 18b: zweite Stufe
- 19: Ringabschnitt
- 20: Kupplungsscheibe
- 21: Nase
- 22: Stift
- 23: Reibelement
- 24: Nabe

## Patentansprüche

1. Fliehkraftpendeleinrichtung (1) für einen Antriebsstrang eines Kraftfahrzeuges, mit einem um eine Drehachse (2) drehbaren Träger (3), einer derart an dem Träger (3) entlang einer Kulissenbahn (4) pendelbar aufgenommenen Pendelmasse (5), dass durch die Pendelmasse (5) im Betrieb ein einer Drehungleichförmigkeit entgegen gerichtetes Rückstellmoment erzeugt ist, einem an der Pendelmasse (5) relativverschieblich anliegenden Kontaktelement (6) sowie einer, das Kontaktelement (6) in einer axialen Richtung der Drehachse (2) an die Pendelmasse (5) andrückenden Federscheibe (7a, 7b), wobei die Federscheibe (7a, 7b) an einem Befestigungsbereich (8) drehfest mit dem Träger (3) verbunden ist, **dadurch gekennzeichnet, dass** die Federscheibe (7a, 7b) eine gewellte Federscheibe (7a, 7b) ist, und dass die Federscheibe (7a, 7b) mit ihrem Befestigungsbereich (8) mit einem in der axialen Richtung hin zu der Pendelmasse (5) vorspringenden trägerfesten Bestandteil (9) verbunden ist.

2. Fliehkraftpendeleinrichtung (1) nach Anspruch 1, **dadurch gekennzeichnet, dass** der trägerfeste Bestandteil (9) durch einen, zwei in axialer Richtung beabstandet zueinander angeordnete Trägerbereiche (10a, 10b) des Trägers (3) miteinander verbindender Abstandsbolzen (11) ausgebildet ist.

3. Fliehkraftpendeleinrichtung (1) nach Anspruch 1 oder 2, **dadurch gekennzeichnet, dass** die Federscheibe (7a, 7b) unmittelbar eine an dem trägerfesten Bestandteil (9) befestigte Verbindungslasche (12) als Befestigungsbereich (8) ausbildet.

4. Fliehkraftpendeleinrichtung (1) nach Anspruch 1 oder 2, **dadurch gekennzeichnet, dass** die Federscheibe (7a, 7b) ein den Befestigungsbereich (8) mit ausbildendes, an dem trägerfesten Bestandteil (9) befestigtes Verbindungselement (13) aufweist.

5. Fliehkraftpendeleinrichtung (1) nach einem der Ansprüche 1 bis 4, **dadurch gekennzeichnet, dass** der Befestigungsbereich (8) mit einem Aufnahmeloch (14) versehen ist und der trägerfeste Bestandteil (9) dieses Aufnahmeloch (14) in der axialen Richtung durchdringt.

6. Fliehkraftpendeleinrichtung (1) nach einem der Ansprüche 1 bis 5, **dadurch gekennzeichnet, dass** der Befestigungsbereich (8) derart mit dem trägerfesten Bestandteil (9) verbunden ist, dass ein gewellter Federbereich (15) der Federscheibe (7a, 7b) in axialer Richtung ungehindert verformbar ist.

7. Fliehkraftpendeleinrichtung (1) nach einem der Ansprüche 1 bis 6, **dadurch gekennzeichnet, dass** der Befestigungsbereich (8) stoffschlüssig mit dem trägerfesten Bestandteil (9) verbunden ist.

8. Fliehkraftpendeleinrichtung (1) nach einem der Ansprüche 1 bis 6, **dadurch gekennzeichnet, dass** der Befestigungsbereich (8) formschlüssig und/oder kraftschlüssig mit dem trägerfesten Bestandteil (9) verbunden ist.

9. Kupplungsscheibe (20) für eine Reibkupplung eines Kraftfahrzeuges, mit einer Fliehkraftpendeleinrichtung (1) nach einem der Ansprüche 1 bis 8 sowie einem mit dem Träger (3) drehfest verbundenen Reibelement (23).

10. Antriebsstrang für ein Kraftfahrzeug, mit einer Fliehkraftpendeleinrichtung (1) nach einem der Ansprüche 1 bis 8, wobei der Träger (3) mit einer Triebwelle drehfest verbunden ist.

## Claims

1. A centrifugal pendulum device (1) for a powertrain of a motor vehicle, having a support (3) which is rotatable about a rotational axis (2), a pendulum mass (5) which is received on the support (3) so as to swing along a slotted guide track (4) in such a way that a restoring torque oriented against a rotational irregularity is generated by the pendulum mass (5) during operation, a contact element (6) which rests against the pendulum mass (5) in a relatively movable manner, and a spring washer (7a, 7b) which presses the contact element (6) against the pendulum mass (5) in an axial direction of the rotational axis (2), wherein the spring washer (7a, 7b) is connected in a non-rotatable manner to the support (3) at a securing region (8), **characterised in that** the spring washer (7a, 7b) is a wave spring washer (7a, 7b) and **in that** the spring washer (7a, 7b) with its securing region (8) is connected to a component (9) which is fixed to the support and protrudes in the axial direction towards the pendulum mass (5).

2. The centrifugal pendulum device (1) according to claim 1, **characterised in that** the component (9) which is fixed to the support is formed by a spacer bolt (11) connecting together two support regions (10a, 10b) of the support (3) that are spaced apart from one another in the axial direction.

3. The centrifugal pendulum device (1) according to claim 1 or 2, **characterised in that** the spring washer (7a, 7b) directly forms a connecting link (12) as a securing region (8), which is secured on the component (9) fixed to the support.

4. The centrifugal pendulum device (1) according to claim 1 or 2, **characterised in that** the spring washer (7a, 7b) has a connecting element (13) which jointly forms the securing region (8) and is secured to the component (9) fixed to the support.

5. The centrifugal pendulum device (1) according to any one of claims 1 to 4, **characterised in that** the securing region (8) is provided with a receiving hole (14) and the component (9) fixed to the support penetrates this receiving hole (14) in the axial direction.

6. The centrifugal pendulum device (1) according to any one of claims 1 to 5, **characterised in that** the securing region (8) is connected to the component (9) fixed to the support in such a way that a wave spring region (15) of the spring washer (7a, 7b) can be deformed without hindrance in the axial direction.

7. The centrifugal pendulum device (1) according to any one of claims 1 to 6, **characterised in that** the securing region (8) is materially bonded to the component (9) fixed to the support.

8. The centrifugal pendulum device (1) according to any one of claims 1 to 6, **characterised in that** the securing region (8) is connected to the component (9) fixed to the support in a form-locking and/or force-locking manner.

9. A clutch disc (20) for a friction clutch of a motor vehicle, having a centrifugal pendulum device (1) according to any one of claims 1 to 8, as well as a friction element (23) which is connected to the support (3) in a non-rotatable manner.

10. A powertrain for a motor vehicle, having a centrifugal pendulum device (1) according to any one of claims 1 to 8, wherein the support (3) is connected to a drive shaft in a non-rotatable manner.

## Revendications

1. Équipement de pendule à force centrifuge (1) pour une chaîne cinématique d'un véhicule automobile, comprenant un élément porteur (3) pouvant tourner autour d'un axe de rotation (2), une masse pendulaire (5) logée contre l'élément porteur (3) de manière à pouvoir osciller le long d'une piste de coulissement (4), de telle sorte qu'un moment de rappel dirigé en opposition à une irrégularité de rotation soit produit par la masse pendulaire (5) en fonctionnement, à un élément de contact (6) s'appuyant contre la masse pendulaire (5) de manière à pouvoir se déplacer relativement ainsi qu'une poulie élastique (7a, 7b) ondulée appuyant l'élément de contact (6) dans une direction axiale de l'axe de rotation (2) contre la masse pendulaire (5), la poulie élastique (7a, 7b) étant raccordée à l'élément porteur (3) de manière solidaire en rotation dans une zone de fixation (8), **caractérisé en ce que** la poulie élastique (7a, 7b) est une poulie élastique (7a, 7b) ondulée et **en ce que** la poulie élastique (7a, 7b), avec sa zone de fixation (8), est raccordée à un élément constitutif (9) solidaire de l'élément porteur en porte-à-faux dans la direction axiale vers la masse pendulaire (5).

2. Équipement de pendule à force centrifuge (1) selon la revendication 1, **caractérisé en ce que** l'élément constitutif (9) solidaire de l'élément porteur est formé par une entretoise (11) reliant entre elles deux zones d'élément porteur (10a, 10b) espacées l'une de l'autre dans la direction axiale de l'élément porteur (3).

3. Équipement de pendule à force centrifuge (1) selon la revendication 1 ou 2, **caractérisé en ce que** la poulie élastique (7a, 7b) forme directement une pièce de raccord (12) fixée sur l'élément constitutif (9) solidaire de l'élément porteur comme zone de fixation (8).

4. Équipement de pendule à force centrifuge (1) selon la revendication 1 ou 2, **caractérisé en ce que** la poulie élastique (7a, 7b) présente un élément de raccord (13) formant conjointement la zone de fixation (8) fixé sur l'élément constitutif (9) solidaire de l'élément porteur.

5. Équipement de pendule à force centrifuge (1) selon l'une quelconque des revendications 1 à 4, **caractérisé en ce que** la zone de fixation (8) est dotée d'un trou de logement (14) et l'élément constitutif (9) solidaire de l'élément porteur traverse ce trou de logement (14) dans la direction axiale.

6. Équipement de pendule à force centrifuge (1) selon l'une quelconque des revendications 1 à 5, **caractérisé en ce que** la zone de fixation (8) est raccordée à l'élément constitutif (9) solidaire de l'élément porteur de sorte qu'une plage de ressort ondulée (15) de la poulie élastique (7a, 7b) puisse être déformée sans entrave dans la direction axiale.

7. Équipement de pendule à force centrifuge (1) selon l'une quelconque des revendications 1 à 6, **caractérisé en ce que** la zone de fixation (8) est raccordée par accouplement de matière avec l'élément constitutif (9) solidaire de l'élément porteur.

8. Équipement de pendule à force centrifuge (1) selon l'une quelconque des revendications 1 à 6, **caractérisé en ce que** la zone de fixation (8) est raccordée par complémentarité de forme et/ou à force avec l'élément constitutif (9) solidaire de l'élément porteur.

9. Poulie d'embrayage (20) pour un embrayage à friction d'un véhicule automobile, comprenant un équipement de pendule à force centrifuge (1) selon l'une quelconque des revendications 1 à 8 ainsi qu'un élément de friction (23) raccordé solidaire en rotation à l'élément porteur (3).

10. Chaîne cinématique pour un véhicule automobile, comprenant un équipement de pendule à force centrifuge (1) selon l'une quelconque des revendications 1 à 8, dans laquelle l'élément porteur (3) est raccordé solidaire en rotation à un arbre d'entraînement.
